# EUROPÄISCHE PATENTSCHRIFT

(11) **EP 4 426 931 B1**
(45) Veröffentlichungstag und Bekanntmachung des Hinweises auf die Patenterteilung: **03.12.2025**
(21) Anmeldenummer: 22805891.3
(22) Anmeldetag: 26.10.2022
(51) Int. Cl.: F03D 5/00, F03D 9/12, F03D 9/25

(54) **VERFAHREN UND VORRICHTUNG ZUM UMWANDELN VON WINDENERGIE IN ELEKTRISCHE ENERGIE**
METHOD AND DEVICE FOR CONVERTING WIND ENERGY INTO ELECTRICAL ENERGY
PROCÉDÉ ET DISPOSITIF DE CONVERSION D'ÉNERGIE ÉOLIENNE EN ÉNERGIE ÉLECTRIQUE

(30) Priorität: 02.11.2021 EP 21206024
(43) Veröffentlichungstag der Anmeldung: 11.09.2024
(73) Patentinhaber: SkySails Power GmbH, 20537 Hamburg (DE)
(72) Erfinder: KAPALA, Jan, 20537 Hamburg (DE)
(74) Vertreter: Glawe, Delfs, Moll
(86) Internationale Anmeldenummer: PCT/EP2022/079881
(87) Internationale Veröffentlichungsnummer: WO 2023/078749

(56) Entgegenhaltungen:
- WO-A2-2009/022979
- KR-A- 20210 004 451

## Beschreibung

Die Erfindung betrifft ein Verfahren und eine Vorrichtung zum Umwandeln von Windenergie in elektrische Energie. Bei dem Verfahren wird in einer ersten Phase eines Betriebszyklus mit einem Kite eine Zugkraft auf eine Zugseilwinde ausgeübt und die Zugkraft in eine Antriebskraft für eine Kraftarbeitsmaschine umgesetzt, so dass die Kraftarbeitsmaschine elektrische Energie erzeugt. In einer zweiten Phase des Betriebszyklus wird mit der Kraftarbeitsmaschine die Zugseilwinde angetrieben, um das Zugseil einzuholen.

Dokument WO 2009/022979 A2 offenbart eine Windkraftanlage mit einem Drachen umfassend eine Leine, die mit einem Generator in einer Bodenstation verbunden ist.

Bei diesem Verfahren wird die Kraftarbeitsmaschine in der ersten Phase des Betriebszyklus generatorisch betrieben. Der Kraftarbeitsmaschine wird also mechanische Energie zugeführt, die in elektrische Energie umgewandelt werden kann. In der zweiten Phase des Betriebszyklus wird die Kraftarbeitsmaschine motorisch betrieben. Es wird also mit der Kraftarbeitsmaschine eine Antriebskraft bereitgestellt, mit der die Zugseilwinde zum Einholen des Zugseils angetrieben wird. Ein Überschuss an elektrischer Energie, der zum Beispiel zum Einspeisen in ein Übertragungsnetz zur Verfügung steht, ergibt sich, wenn der Kraftarbeitsmaschine in der ersten Phase des Betriebszyklus mehr Energie zugeführt wird, als in der zweiten Phase des Betriebszyklus entnommen wird. Es stellt sich das Problem, dass es beim Wechsel zwischen dem generatorischen und dem motorischen Betrieb der Kraftarbeitsmaschine zu Verlusten kommen kann, die sich negativ auf den Wirkungsgrad des Verfahrens ausüben.

Der Erfindung liegt die Aufgabe zugrunde, ein Verfahren und eine Vorrichtung zum Umwandeln von Windenergie in elektrische Energie vorzustellen, die einen hohen Wirkungsgrad hat. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren umfasst die Kraftarbeitsmaschine einen ersten Läufer, einen in elektrischer Wechselwirkung mit dem ersten Läufer stehenden zweiten Läufer und einen axialen Abschnitt, in dem die magnetischen Komponenten des ersten Läufers mit den magnetischen Komponenten des zweiten Läufers überlappen. Der erste Läufer ist mechanisch mit der Zugseilwinde gekoppelt. In der zweiten Phase des Betriebszyklus wird kinetische Energie des zweiten Läufers genutzt, um die Zugseilwinde anzutreiben.

Die Erfindung geht aus von dem Gedanken, dass durch geeignete Ansteuerung der Kraftarbeitsmaschine das zwischen dem ersten Läufer und dem zweiten Läufer übertragene Drehmoment weitgehend unabhängig von der mechanischen Bewegung der Läufer relativ zueinander eingestellt werden kann. Es ist demnach möglich, dem einen Läufer kinetische Energie zu entziehen und diese zu nutzen, um dem anderen Läufer kinetische Energie zuzuführen. Von dieser Möglichkeit wird in der zweiten Phase des Betriebszyklus Gebrauch gemacht, um unter Nutzung von kinetischer Energie des einen Läufers eine Antriebskraft für die Zugseilwinde aufzubringen.

Das Verfahren kann so durchgeführt werden, dass die gesamte Energie, die in der zweiten Phase des Betriebszyklus zum Einholen des Zugseils benötigt wird, aus kinetischer Energie des zweiten Läufers entnommen wird. Ebenso ist es möglich, nur einen Teil der in der zweiten Phase des Betriebszyklus erforderlichen Energie aus kinetischer Energie des zweiten Läufers zu entnehmen, während ein anderer Teil der Energie aus einer anderen Quelle zugeführt wird. Beispielsweise kann der Kraftarbeitsmaschine elektrische Energie aus einem Energiespeicher oder einem elektrischen Netz zugeführt werden, die mit der Kraftarbeitsmaschine in eine Antriebskraft für die Zugseilwinde umgewandelt wird.

Als Betriebszyklus wird ein Ablauf bezeichnet, der sich vom Beginn eines Fiervorgangs bis zum Ende des unmittelbar daran anschließenden Einholvorgangs erstreckt. Bei einem regulären Betriebszyklus wird das Zugseil mit dem Einholvorgang bis auf dieselbe Länge eingeholt, die es zu Beginn des Fiervorgangs hatte. Der nachfolgende Fiervorgang beginnt dann mit derselben Zugseillänge wie der vorangegangene Fiervorgang. Der Begriff Betriebszyklus ist nicht auf reguläre Betriebszyklen beschränkt. Ebenso ist es möglich, dass die Zugseillänge am Ende des Einholvorgangs größer oder kleiner ist als zum Beginn des vorangegangenen Fiervorgangs. Indem die Zugseillänge sowohl zu Beginn eines Fiervorgangs als auch zu Beginn eines Einholvorgangs variabel gewählt werden kann, kann flexibel auf sich ändernde Betriebsbedingungen, wie beispielsweise geänderte Windverhältnisse oder geänderte Anforderungen in der Netzeinspeisung, reagiert werden.

Die Drehrichtung des ersten Läufers unterliegt einer direkten Kopplung mit dem Betriebszyklus. Wird das Zugseil in der ersten Phase des Betriebszyklus ausgefiert, so dreht der erste Läufer sich in eine Richtung. Wird das Zugseil in der zweiten Phase des Betriebszyklus eingeholt, so dreht sich der erste Läufer in entgegengesetzter Richtung.

Eine solche unmittelbare Kopplung zwischen den Phasen des Betriebszyklus und der Drehrichtung gibt es bei dem zweiten Läufer nicht. Es kann ein elektrisches Drehmoment zwischen dem ersten Läufer und dem zweiten Läufer unabhängig davon übertragen werden, wie der erste Läufer und der zweite Läufer sich relativ zueinander drehen. Bei dem Verfahren kann es in der ersten Phase des Betriebszyklus Abschnitte geben, in denen der erste Läufer und der zweite Läufer dieselbe Drehrichtung haben. Ebenso kann es Phasen geben, in denen der erste Läufer und der zweite Läufer sich in entgegengesetzter Richtung drehen. Möglich sind auch Phasen, bei denen der zweite Läufer relativ zum Gehäuse der Kraftarbeitsmaschine ruht. In der zweiten Phase des Betriebszyklus gilt Entsprechendes für die Drehbewegung der Läufer relativ zueinander.

Bei der Kraftarbeitsmaschine ist mindestens einer der Läufer ein extern erregter Läufer. Eine Welle des extern erregten Läufers kann mit Schleifringen versehen sein, über die der Läufer elektrisch erregt werden kann. Die Vorrichtung kann einen ersten Umrichter umfassen, über den dem Läufer ein zum Erregen geeignetes elektrisches Signal zugeführt wird.

Der andere Läufer der Kraftarbeitsmaschine kann einen Permanentmagnet umfassen. In diesem Fall kann auf eine externe elektrische Erregung verzichtet werden. In einer Ausführungsform ist auch der andere Läufer ein extern erregter Läufer, der über Schleifringe elektrisch angesteuert werden kann. Die Vorrichtung kann einen zweiten Umrichter umfassen, um auch diesen Läufer ein zum Erregen geeignetes elektrisches Signal zuführen zu können.

Die Drehrichtung des ersten Läufers kehrt sich während eines Betriebszyklus um, so dass der erste Läufer im Laufe eines Betriebszyklus abgebremst und beschleunigt wird. Um die für das Abbremsen und Beschleunigen erforderliche Energie gering zu halten, ist es von Vorteil, wenn der erste Läufer eine geringere Masse hat. Hingegen ist bei dem zweiten Läufer eine hohe Masse von Vorteil, weil auf diese Weise mehr kinetische Energie in Form von Rotationsenergie gespeichert werden kann. Die Masse des zweiten Läufers kann höher sein als die Masse des ersten Läufers, vorzugsweise mindestens um den Faktor 2 höher, weiter vorzugsweise mindestens um den Faktor 5 höher, weiter vorzugsweise mindestens um den Faktor 10 höher. Eine zwischen der Kraftarbeitsmaschine und der Zugseilwinde angeordnete Welle gehört in diesem Sinne nicht zur Masse des ersten Läufers. Hingegen umfasst die Masse des zweiten Läufers sämtliche Elemente, die sich zusammen mit dem zweiten Läufer drehen.

Die Kraftarbeitsmaschine umfasst einen axialen Abschnitt, in dem die magnetischen Komponenten des ersten Läufers mit den magnetischen Komponenten des zweiten Läufers überlappen. Mit anderen Worten gibt es einen radialen Strahl, der von der Achse der Kraftarbeitsmaschine ausgeht und der den ersten Läufer und den zweiten Läufer schneidet. Bezogen auf diesen Abschnitt kann der erste Läufer als Innenläufer und der zweite Läufer als Außenläufer ausgebildet sein. Die Gestaltung des zweiten Läufers als Außenläufer ist von Vorteil, weil die bewegte Masse einen größeren Abstand zur Drehachse hat und damit in höherem Maße zum Trägheitsmoment des zweiten Läufers beiträgt. Möglich ist auch eine umgekehrte Gestaltung, bei der der zweite Läufer als Innenläufer und der erste Läufer als Außenläufer ausgebildet ist. Die Kraftarbeitsmaschine kann ein Gehäuse umfassen, das sich um den ersten und zweiten Läufer herum erstreckt.

Zwischen der Zugseilwinde und der Kraftarbeitsmaschine kann sich eine Welle erstrecken, die die beiden Komponenten mechanisch miteinander verbindet. Möglich ist auch ein zwischen der Zugseilwinde und der Kraftarbeitsmaschine angeordnetes Getriebe. Die Zugseilwinde kann axial von der Kraftarbeitsmaschine beabstandet sein. In einer anderen Ausführungsform bilden die Kraftarbeitsmaschine und die Zugseilwinde eine integrierte Komponente. Insbesondere kann eine Trommel der Zugseilwinde, auf die das Zugseil aufgewickelt wird, in axialer Richtung mit dem ersten Läufer der Kraftarbeitsmaschine überlappen. Eine direkte Verbindung zwischen dem ersten Läufer und einer radial außerhalb des ersten Läufers angeordneten Drehtrommel ist möglich, wenn der erste Läufer den Außenläufer der Kraftarbeitsmaschine bildet.

Um das Potenzial zur Speicherung kinetischer Energie in Form von Rotationsenergie zu erhöhen, kann der zweite Läufer mit einer Schwungmasse versehen sein, die nicht zur elektromagnetischen Wechselwirkung mit dem ersten Läufer beiträgt. Die Schwungmasse kann in einem anderen axialen Abschnitt der Kraftarbeitsmaschine angeordnet sein als die magnetischen Komponenten des zweiten Läufers. Die Schwungmasse kann innerhalb oder außerhalb eines Gehäuses der Kraftarbeitsmaschine angeordnet sein. Zwischen der Schwungmasse und den magnetischen Komponenten des zweiten Läufers kann ein Lager angeordnet sein, mit dem der zweite Läufer relativ zu einem Rahmen der Kraftarbeitsmaschine gelagert ist. Die Schwungmasse kann wenigstens 50 %, vorzugsweise wenigstens 70 %, weiter vorzugsweise wenigstens 80 % der Gesamtmasse des zweiten Läufers ausmachen.

Die Lagerung der Kraftarbeitsmaschine kann so gestaltet sein, dass der zweite Läufer relativ zu einem Rahmen der Kraftarbeitsmaschine drehbar gelagert ist und dass der erste Läufer relativ zu dem zweiten Läufer drehbar gelagert ist. Möglich ist auch die umgekehrte Gestaltung, bei der der erste Läufer relativ zu dem Rahmen der Kraftarbeitsmaschine drehbar gelagert ist und der zweite Läufer relativ zu dem ersten Läufer drehbar gelagert ist. Zwischen dem ersten Läufer und der Zugseilwinde kann sich eine Welle erstrecken, die den ersten Läufer mechanisch mit der Zugseilwinde verbindet.

Es kann eine Steuereinheit vorgesehen sein, die das Zusammenspiel der Komponenten steuert. Die Steuereinheit kann so eingerichtet sein, dass sie Steuersignale an eine Gondel des Kite sendet, mit der der Kite entlang vorgegebener Flugbahnen gesteuert wird. Anhand der Steuersignale kann die Länge von Steuerleinen des Kite verändert werden, um die Flugrichtung des Kite zu beeinflussen.

Die Steuereinheit kann außerdem dazu eingerichtet sein, Steuersignale zu geben, mit denen die elektrische Erregung des ersten Läufers und/oder die elektrische Erregung des zweiten Läufers eingestellt wird. Die Steuersignale können jeweils an einen dem Läufer zugeordneten Umrichter gehen, über den die geeigneten elektrischen Signale an den jeweiligen Läufer gesendet werden.

Die Steuereinheit kann die Kraftarbeitsmaschine, insbesondere die magnetischen Komponenten des ersten Läufers und/oder des zweiten Läufers so ansteuern, dass in der ersten Phase des Betriebszyklus der zweite Läufer beschleunigt wird. Insbesondere kann in der ersten Phase des Betriebszyklus eine Menge an kinetischer Energie in dem zweiten Läufer gespeichert werden, die ausreicht, um das Zugseil bis zur Ausgangsposition für den Start eines nachfolgenden regulären Betriebszyklus einzuholen. Möglich ist auch, dass die Steuereinheit die Kraftarbeitsmaschine so ansteuert, dass in der ersten Phase des Betriebszyklus eine Menge an kinetischer Energie in dem zweiten Läufer gespeichert wird, die geringer ist als die zum Einholen des Zugseils erforderliche Energie, und dass zum Einholen des Zugseils elektrische Energie aus einer externen Quelle zugeführt wird.

Weiter kann die Steuereinheit die Kraftarbeitsmaschine so ansteuern, dass die Energieeinspeisung an die Erfordernisse des Übertragungsnetzes angepasst wird. Kurzfristigen Phasen einer zu hohen Energieeinspeisung kann entgegengewirkt werden, indem der zweite Läufer beschleunigt wird. Kurzfristigen Phasen einer zu niedrigen Energieeinspeisung kann entgegengewirkt werden, indem dem zweiten Läufer kinetische Energie entnommen wird. Es können auch Beiträge zu einer kurzfristigen Stabilisierung des Übertragungsnetzes geleistet werden, indem dem zweiten Läufer kinetische Energie entnommen wird und in das Übertragungsnetz eingespeist wird, oder indem alternativ dem zweiten Läufer kinetische Energie zugeführt wird und dem Übertragungsnetz entnommen wird. Die Steuereinheit kann lokal gewonnene Eingangsinformationen verarbeiten, um die Energieeinspeisung an die Erfordernisse des Übertragungsnetzes anzupassen. Bei den lokal gewonnenen Eingangsinformationen können es sich beispielsweise um Sensordaten von der Kraftarbeitsmaschine oder der Zugseilwinde handeln. Möglich ist auch, dass die Steuereinheit extern erzeugte Eingangsinformationen verarbeitet, wie beispielsweise eine vom Übertragungsnetz erhaltene Steuervorgabe.

Die Erfindung betrifft auch eine Vorrichtung zum Umwandeln von Windenergie in elektrische Energie. Die Vorrichtung umfasst ein Kite, eine Zugseilwinde und ein Zugseil, das sich zwischen der Zugseilwinde und dem Kite erstreckt. Eine Steuereinheit steuert das Kite und die Kraftarbeitsmaschine an. Die Zugseilwinde ist mit einer Kraftarbeitsmaschine gekoppelt, so dass in einem generatorischen Betrieb die Kraftarbeitsmaschine durch eine auf das Zugseil wirkende Kraft angetrieben wird, um elektrische Energie zu erzeugen, und so dass in einem motorischen Betrieb die Zugsweilwinde von der Kraftarbeitsmachine angetrieben wird, um das Zugseil einzuholen. Die Kraftarbeitsmaschine umfasst einen ersten Läufer und einen in elektrischer Wechselwirkung mit dem ersten Läufer stehenden zweiten Läufer. Die Kraftarbeitsmaschine umfasst einen axialen Abschnitt, in dem die magnetischen Komponenten des ersten Läufers mit den magnetischen Komponenten des zweiten Läufers überlappen.

Die Steuereinheit kann in einer ersten Phase eines Betriebszyklus den Kite so ansteuern, dass der Kite eine Zugkraft auf das Zugseil ausübt und dass die Kraftarbeitsmaschine durch die Zugkraft angetrieben wird. In einer zweiten Phase eines Betriebszyklus kann die Steuereinheit die Kraftarbeitsmaschine so ansteuern, dass die Kraftarbeitsmaschine unter Entnahme von kinetischer Energie aus dem zweiten Läufer die Zugseilwinde antreibt.

Die Vorrichtung kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang der erfindungsgemäßen Vorrichtung beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Vorrichtung;
- Fig. 2:: eine schematische Darstellung eines Betriebszustands der Vorrichtung aus Fig. 1;
- Fig. 3:: eine schematische Darstellung eines Betriebszyklus der Vorrichtung aus Fig. 1;
- Fig. 4:: die Energiebilanz während des Zyklus aus Fig. 3;
- Fig. 5:: eine schematische Darstellung von Komponenten der Vorrichtung aus Fig. 1;
- Fig. 6:: eine schematische Darstellung der Kraftarbeitsmaschine aus Fig. 5;
- Fig. 7:: einen Schnitt entlang Linie A-A in Fig. 6;
- Fig. 8:: die Ansicht gemäß Fig. 5 bei einer alternativen Ausführungsform der Erfindung.

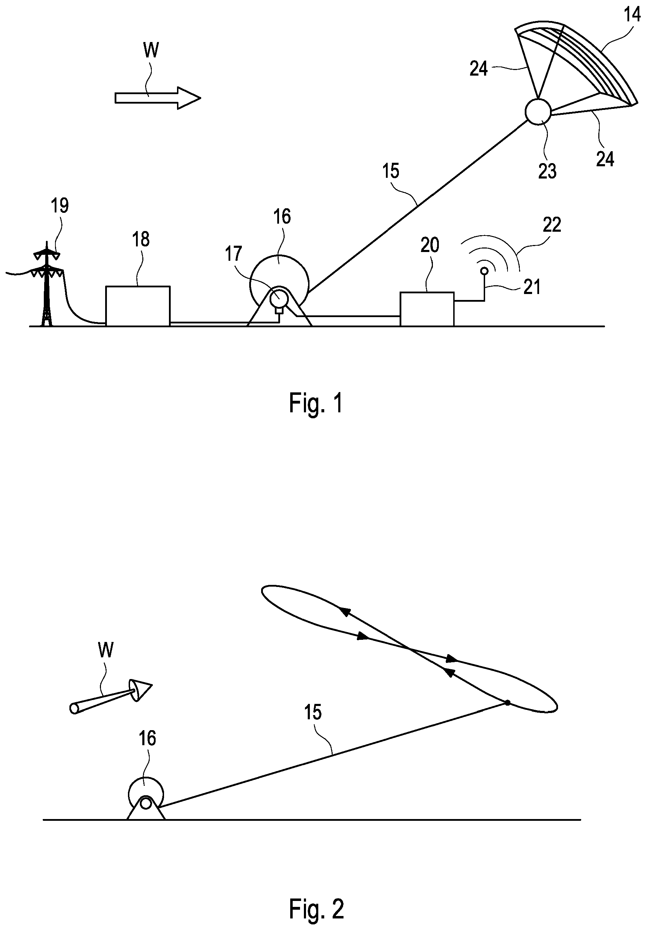

Die erfindungsgemäße Vorrichtung umfasst gemäß Fig. 1 einen frei ausfliegenden Kite 14, der über ein Zugseil 15 mit einer Zugseilwinde 16 verbunden ist. Mit der Zugseilwinde 16 gekoppelt ist eine elektrische Kraftarbeitsmaschine 17, die in einem ersten Betriebszustand als Generator und in einem zweiten Betriebszustand als Motor arbeitet. Die Kraftarbeitsmaschine 17 und die Zugseilwinde 16 sind über eine Welle 27 mechanisch miteinander verbunden. Alternativ kann die Kraftarbeitsmaschine 17 über ein Getriebe mit der Zugseilwinde 16 gekoppelt sein.

Die Kraftarbeitsmaschine ist über einen elektrischen Leistungsstrang 18, der einen Umrichter und einen Transformator umfasst, an ein öffentliches Übertragungsnetz 19 angeschlossen, so dass entweder mit der Kraftarbeitsmaschine 17 erzeugte elektrische Energie in das Übertragungsnetz 19 eingespeist werden kann oder die Kraftarbeitsmaschine 17 mit aus dem Übertragungsnetz 19 entnommener elektrische Energie als Motor betrieben werden kann. Der elektrische Leistungsstrang 18 kann zusätzlich über ein oder mehrere Energiespeicher zur Speicherung elektrischer Energie umfassen. Die Vorrichtung umfasst eine Steuereinheit 20, die dazu ausgelegt ist, das Zusammenspiel der Komponenten der Vorrichtung, insbesondere das Zusammenspiel zwischen dem Kite 14 und der Kraftarbeitsmaschine 17 zu steuern.

Die Steuereinheit 20 umfasst eine Antenne 21, so dass über eine Funkverbindung 22 Steuersignale mit einer an den Kite 14 angeschlossenen Gondel 23 ausgetauscht werden können. Insbesondere werden von der Steuereinheit 20 Steuersignale an die Gondel 23 gesendet, um die Flugbahn des Kite 14 zu steuern. Unter Nutzung der Steuersignale wird die Länge von Steuerleinen 24 zwischen der Gondel 23 und dem Kite 14 verändert, wodurch Einfluss auf die Flugrichtung des Kite 14 genommen wird.

In dem Ausführungsbeispiel gemäß Fig. 2 wird der Kite 14 entlang einer im Wesentlichen quer zur Windrichtung W ausgerichteten liegenden Acht geführt. Während der Kite 14 der Flugbahn folgt, wird eine Zugkraft auf das Zugseil 15 ausgeübt, mit der über die Zugseilwinde 16 die Kraftarbeitsmaschine 17 angetrieben wird. Mit der in diesem Betriebszustand als Generator betriebenen Kraftarbeitsmaschine 17 wird die mechanische Energie in elektrische Energie umgewandelt und über den Leistungsstrang 18 in das öffentliche Übertragungsnetz 19 eingespeist. Möglich ist auch, einen Teil der erzeugten Energie in elektrischer Form in einem Energiespeicher des Leistungsstrangs 18 zu speichern.

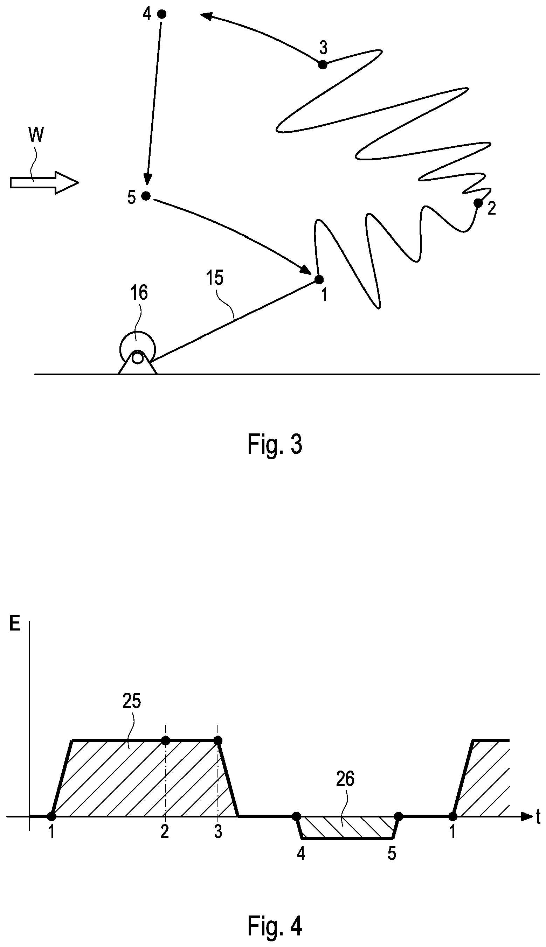

Gemäß Fig. 3 kann auf diese Weise elektrische Energie erzeugt werden, bis die Länge des Zugseils 15 ausgeschöpft ist und das Zugseil 15 vollständig von der Zugseilwinde 16 ausgefiert ist. Anschließend muss das Zugseil 15 eingeholt werden, bevor erneut elektrische Energie erzeugt werden kann.

Wenn das Zugseil 15 jeweils über seine volle Länge ausgeführt wird und anschließend in dieselbe Startposition eingeholt wird, ergibt sich ein regulärer Betriebszyklus, wie er in Fig. 3 gezeigt ist. Der Betriebszyklus beginnt in einer Position 1 der Flugbahn. Ausgehend von dieser Position 1 wird das Zugseil 15 gefiert, während das Kite 14 seiner Flugbahn folgt und eine Zugkraft auf das Zugseil 15 ausübt. An einer Position 2 wird die Fiergeschwindigkeit des Zugseils 15 reduziert und die Bewegung des Kite 14 in eine Richtung umgelenkt, die in eine Zenitposition 4 vertikal oberhalb der Zugseilwinde 16 des Zugseils 15 führt. Zu Beginn dieser Bewegung wird das Kite weiterhin entlang von Flugbahnen gelenkt, auf denen eine Zugkraft ausgeübt wird und elektrische Energie erzeugt wird. Reicht ab einer Position 3 die Zugseilkraft für die Energieerzeugung nicht mehr aus, wird die Fierbewegung des Zugseils 15 zum Halt gebracht und das Kite in die Zenitposition 4 vertikal oberhalb der Zugseilwinde 16 gelenkt.

Ist die Zenitposition 4 erreicht, wird die Kraftarbeitsmaschine 17 als Motor geschaltet und das Zugseil 15 unter Aufbringung von Energie bis in Position 5 eingeholt. Von Position 5 aus wird der Lenkdrachen 10 zurück zu Position 1 geführt, so dass der Betriebszyklus von Neuem beginnen kann.

Da die Zugseilkraft auf dem Weg von der Zenitposition 4 zu Position 5 geringer ist als während der vorherigen Flugbahnen, ist die zum Einholen der zuvor gefierten Zugseillänge erforderliche Energie geringer als die beim Fieren des Zugseils 15 gewonnene Energie. Aus der Differenz der in Fig. 4 schraffierten Fläche 25 und der schraffierten Fläche 26 ergibt sich die während eines Betriebszyklus gewonnene Menge an elektrischer Energie **E.** Die schraffierte Fläche 25 entspricht der ersten Phase 25 eines Betriebszyklus, die schraffierte Fläche 26 entspricht der zweiten Phase 26 eines Betriebszyklus.

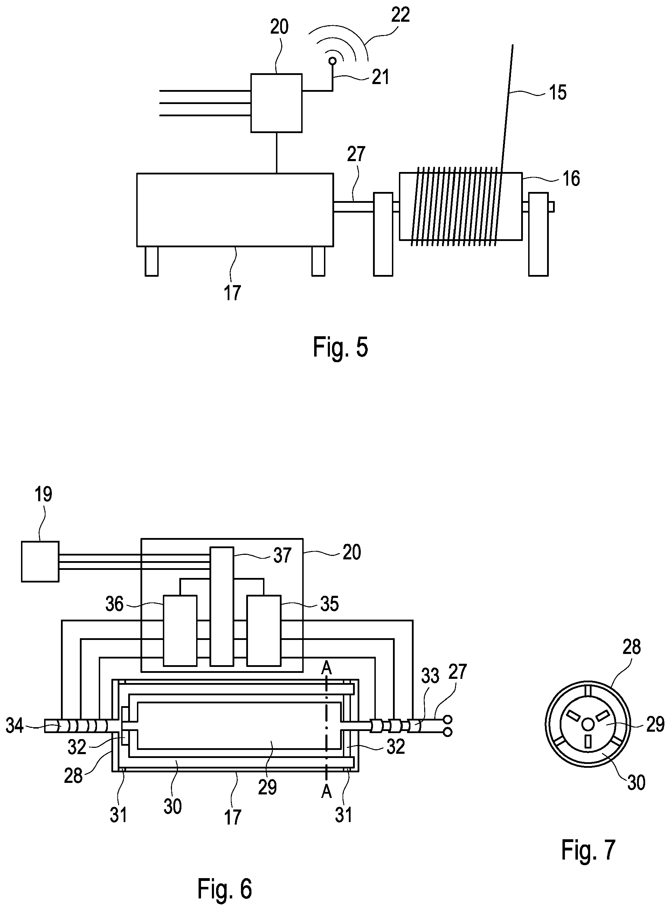

Gemäß Fig. 6 umfasst die Kraftarbeitsmaschine 17 einen Rahmen 28, in dem ein als Innenläufer ausgebildeter erster Läufer 29 und ein als Außenläufer ausgebildeter zweiter Läufer 30 angeordnet sind. Über zwei äußere Drehlager 31 ist der zweite Läufer 30 relativ zu dem Rahmen 28 drehbar gelagert. Über zwei innere Drehlager 32 ist der erste Läufer 29 drehbar relativ zu dem zweiten Läufer 30 gelagert.

Der erste Läufer 29 ist über die Welle 27 an die Zugseilwinde 16 angeschlossen, so dass die Drehrichtung des ersten Läufers 29 fest mit dem Betriebszustand der Zugseilwinde 16 gekoppelt ist. Wird das Zugseil 15 eingeholt, so dreht sich der erste Läufer 29 in der einen Richtung, wird das Zugseil 15 ausgefiert, so dreht sich der erste Läufer 29 in der entgegengesetzten Richtung.

Hingegen ist die Drehrichtung des zweiten Läufers 30 nicht mit dem Betriebszustand der Zugseilwinde 16 gekoppelt. In welche Richtung und wie schnell der zweite Läufer 30 sich dreht, hängt in erster Linie von den elektrischen und magnetischen Kräften ab, die zwischen dem ersten Läufer 29 und dem zweiten Läufer 30 wirken. Der erste Läufer 29 und der zweite Läufer 30 sind jeweils extern erregt und werden über Schleifringe 33, 34 angesteuert.

Die Steuereinheit 20 umfasst einen ersten Umrichter 35, über den elektrische Leistung zu dem ersten Läufer 29 übertragen und von dem ersten Läufer 29 empfangen werden kann. Die Steuereinheit 20 umfasst einen zweiten Umrichter 36, über den elektrische Leistung zu dem zweiten Läufer 30 übertragen und von dem zweiten Läufer 30 empfangen werden kann. Über einen Leistungsstrang 37 erfolgt die Einspeisung von elektrischer Energie in das Übertragungsnetz 19.

Die Steuereinheit 20 steuert die Kraftarbeitsmaschine 17 so an, dass in der ersten Phase des Betriebszyklus, in der das Zugseil 15 unter der von dem Kite 14 aufgebrachten Zugkraft ausgefiert wird, ein Teil der auf die Kraftarbeitsmaschine 17 wirkenden Antriebsenergie in elektrische Energie umgewandelt wird und in das Übertragungsnetz 19 eingespeist wird, während ein anderer Teil der Antriebsenergie als kinetische Energie in Form von Rotationsenergie auf den zweiten Läufer 30 übertragen wird. Am Ende der ersten Phase des Betriebszyklus, wenn der Kite 14 in der Zenitposition 4 über der Zugseilwinde 16 steht, steht die Zugseilwinde 16 still und der erste Läufer 29 unterliegt keiner Drehung. Der zweite Läufer 30 dreht sich zu diesem Zeitpunkt mit hoher Drehzahl. Die Kraftarbeitsmaschine 17 wird von der Steuereinheit 20 so angesteuert, dass kein Drehmoment zwischen dem ersten Läufer 29 und dem zweiten Läufer 30 übertragen wird.

Zum Beginn der zweiten Phase des Betriebszyklus wird die Kraftarbeitsmaschine 17 so von der Steuereinheit 20 angesteuert, dass ein Drehmoment auf den ersten Läufer 29 wirkt, mit dem die Zugseilwinde 16 angetrieben und das Zugseil 15 eingeholt wird. Durch das Drehmoment wird dem zweiten Läufer 30 kinetische Energie entzogen, so dass sich die Drehzahl des zweiten Läufers 30 mit dem Einholen des Zugseils 15 kontinuierlich reduziert. Am Ende der zweiten Phase des Betriebszyklus kommen sowohl der erste Läufer 29 als auch der zweite Läufer 30 zum Stillstand. Mit dem Ausfieren des Zugseils 15 unter der Zugkraft des Kite 14 beginnt der nächste Betriebszyklus, in dem wieder elektrische Energie in das Übertragungsnetz 19 eingespeist wird und der zweite Läufer 30 beschleunigt wird.

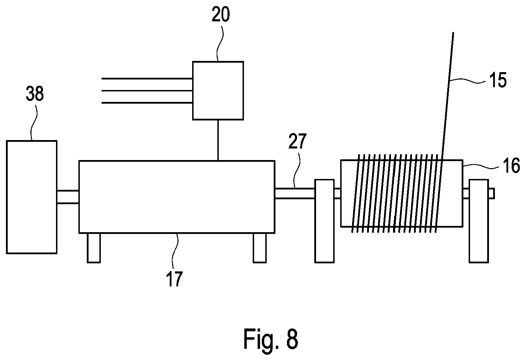

Bei der alternativen Ausführungsform gemäß Fig. 8 ist an dem zweiten Läufer 30 eine Schwungmasse 38 angeschlossen, deren Masse deutlich größer ist als die Masse der elektrischen und magnetischen Komponenten des zweiten Läufers 30. Durch die Schwungmasse 38 kann bei reduzierter Drehzahl eine erhöhte Menge an kinetische Energie mit dem zweiten Läufer 30 bereitgestellt werden.

## Patentansprüche

1. Verfahren zum Umwandeln von Windenergie in elektrische Energie, bei dem in einer ersten Phase (25) eines Betriebszyklus mit einem Kite (14) eine Zugkraft auf eine Zugseilwinde (16) ausgeübt wird und die Zugkraft in eine Antriebskraft für eine Kraftarbeitsmaschine (17) umgesetzt wird, so dass die Kraftarbeitsmaschine (17) elektrische Energie erzeugt, und bei dem in einer zweiten Phase (26) des Betriebszyklus die Zugseilwinde (16) mit der Kraftarbeitsmaschine (17) angetrieben wird, um das Zugseil (15) einzuholen, wobei die Kraftarbeitsmaschine (17) einen ersten Läufer (29), einen in elektrischer Wechselwirkung mit dem ersten Läufer (29) stehenden zweiten Läufer (30) und einen axialen Abschnitt umfasst, in dem die magnetischen Komponenten des ersten Läufers (29) mit den magnetischen Komponenten des zweiten Läufers (30) überlappen, wobei der erste Läufer (29) mechanisch mit der Zugseilwinde (16) gekoppelt ist und wobei in der zweiten Phase (26) des Betriebszyklus kinetische Energie des zweiten Läufers (30) genutzt wird, um die Zugseilwinde (16) anzutreiben.

2. Verfahren nach Anspruch 1, **dadurch gekennzeichnet, dass** der erste Läufer (29) und der zweite Läufer (30) extern erregte Läufer sind.

3. Verfahren nach Anspruch 1 oder 2, **dadurch gekennzeichnet, dass** der zweite Läufer (30) eine höhere Masse hat als der erste Läufer (29).

4. Verfahren nach einem der Ansprüche 1 bis 3, **dadurch gekennzeichnet, dass** der zweite Läufer (30) ein Außenläufer ist.

5. Verfahren nach einem der Ansprüche 1 bis 4, **dadurch gekennzeichnet, dass** der zweite Läufer (30) mit einer Schwungmasse (38) versehen ist.

6. Verfahren nach einem der Ansprüche 1 bis 5, **dadurch gekennzeichnet, dass** der erste Läufer (29) und/oder der zweite Läufer (30) so angesteuert werden, dass der zweite Läufer (30) in der ersten Phase (25) des Betriebszyklus beschleunigt wird.

7. Verfahren nach Anspruch 6, **dadurch gekennzeichnet, dass** in der ersten Phase (25) des Betriebszyklus eine Menge an kinetischer Energie in dem zweiten Läufer (30) gespeichert wird, die ausreicht, um das Zugseil (15) bis zur Ausgangsposition (5) für den Start des nächsten Betriebszyklus einzuholen.

8. Verfahren nach Anspruch 6, **dadurch gekennzeichnet, dass** in der ersten Phase (25) des Betriebszyklus eine Menge an kinetischer Energie in dem zweiten Läufer (30) gespeichert wird, die geringer ist als die zum Einholen des Zugseils (15) erforderliche Energie, und dass zum Einholen des Zugseils (15) elektrische Energie aus einer externen Quelle (19) zugeführt wird.

9. Verfahren nach einem der Ansprüche 1 bis 8, **dadurch gekennzeichnet, dass** die Kraftarbeitsmaschine (17) so angesteuert wird, dass die Energieeinspeisung an die Erfordernisse des Übertragungsnetzes (19) angepasst wird, indem in einer Phase zu hoher Energieeinspeisung durch Beschleunigung des zweiten Läufers (30) entgegengewirkt wird, und/oder indem einer Phase zu niedriger Energieeinspeisung durch Entnahme von kinetischer Energie aus dem zweiten Läufer (30) entgegengewirkt wird.

10. Vorrichtung zum Umwandeln von Windenergie in elektrische Energie, mit einem Kite (14), mit einer Zugseilwinde (16), mit einem Zugseil (15), das sich zwischen der Zugseilwinde (16) und dem Kite (14) erstreckt, und mit einer Steuereinheit (20), die den Kite (14) und eine Kraftarbeitsmaschine (17) ansteuert, wobei die Zugseilwinde (16) mit der Kraftarbeitsmaschine (17) gekoppelt ist, so dass in einem generatorischen Betrieb die Kraftarbeitsmaschine (17) durch eine auf das Zugseil (15) wirkende Kraft angetrieben wird, um elektrische Energie zu erzeugen, und so dass in einem motorischen Betrieb die Zugsweilwinde (16) von der Kraftarbeitsmachine (17) angetrieben wird, um das Zugseil (15) einzuholen, wobei die Kraftarbeitsmaschine (17) einen ersten Läufer (29), einen in elektrischer Wechselwirkung mit dem ersten Läufer (29) stehenden zweiten Läufer (30) und einen axialen Abschnitt umfasst, in dem die magnetischen Komponenten des ersten Läufers (29) mit den magnetischen Komponenten des zweiten Läufers (30) überlappen.

11. Vorrichtung nach Anspruch 10, **dadurch gekennzeichnet, dass** in einer ersten Phase (25) eines Betriebszyklus die Steuereinheit (20) den Kite (14) so ansteuert, dass der Kite (14) eine Zugkraft auf das Zugseil (15) ausübt und dass die Kraftarbeitsmaschine (17) durch die Zugkraft angetrieben wird.

12. Vorrichtung nach Anspruch 10 oder 11, **dadurch gekennzeichnet, dass** in einer zweiten Phase (26) eines Betriebszyklus die Steuereinheit (20) die Kraftarbeitsmaschine (17) so ansteuert, dass die Kraftarbeitsmaschine (17) unter Entnahme von kinetischer Energie aus dem zweiten Läufer (30) die Zugseilwinde (16) antreibt.

## Claims

1. Method for converting wind energy into electrical energy, in which, in a first phase (25) of an operating cycle, a kite (14) is used to exert a tractive force upon a traction-cable winch (16), and the tractive force is converted into a driving force for a power driven machine (17), such that the power driven machine (17) generates electrical energy, and in which, in a second phase (26) of the operating cycle, the power driven machine (17) is used to drive the traction-cable winch (16) to reel-in the traction cable (15), the power driven machine (17) comprising a first rotor (29), a second rotor (30) that interacts electrically with the first rotor (29), and an axial portion in which the magnetic components of the first rotor (29) overlap with the magnetic components of the second rotor (30), the first rotor (29) being mechanically coupled to the traction-cable winch (16) and, in the second phase (26) of the operating cycle, kinetic energy of the second rotor (30) being used to drive the traction-cable winch (16).

2. Method according to Claim 1, **characterized in that** the first rotor (29) and the second rotor (30) are externally excited rotors.

3. Method according to Claim 1 or 2, **characterized in that** the second rotor (30) has a higher mass than the first rotor (29).

4. Method according to any one of Claims 1 to 3, **characterized in that** the second rotor (30) is an external rotor.

5. Method according to any one of Claims 1 to 4, **characterized in that** the second rotor (30) is provided with a centrifugal mass (38).

6. Method according to any one of Claims 1 to 5, **characterized in that** that the first rotor (29) and/or the second rotor (30) is/are controlled in such a way that the second rotor (30) is accelerated in the first phase (25) of the operating cycle.

7. Method according to Claim 6, **characterized in that** that, in the first phase (25) of the operating cycle, an amount of kinetic energy is stored in the second rotor (30) sufficient to reel-in the traction cable (15) to the initial position (5) for the start of the next operating cycle.

8. Method according to Claim 6, **characterized in that**, in the first phase (25) of the operating cycle, an amount of kinetic energy is stored in the second rotor (30) that is less than the energy required to reel-in the traction cable (15), and that electrical energy is supplied from an external source (19) for the purpose of reeling-in the traction cable (15).

9. Method according to any one of Claims 1 to 8, **characterized in that** the power driven machine (17) is controlled in such a way that the energy feed-in is adjusted to the requirements of the transmission network (19), **in that** a phase of excessively high energy feed-in is counteracted by accelerating the second rotor (30), and/or **in that** a phase of insufficient energy feed-in is counteracted by extracting kinetic energy from the second rotor (30).

10. Device for converting wind energy into electrical energy, comprising a kite (14), comprising a traction-cable winch (16), comprising a traction cable (15) that extends between the traction-cable winch (16) and the kite (14), and comprising a control unit (20) that controls the kite (14) and a power driven machine (17), the traction-cable winch (16) being coupled to the power driven machine (17) such that, when operating as a generator, the power driven machine (17) is driven by a force acting upon the traction cable (15) to generate electrical energy, and such that, when operating as a motor, the traction-cable winch (16) is driven by the power driven machine (17) to reel-in the traction cable (15), the power driven machine (17) comprising a first rotor (29), a second rotor (30) that interacts electrically with the first rotor (29), and an axial portion in which the magnetic components of the first rotor (29) overlap with the magnetic components of the second rotor (30).

11. Device according to Claim 10, **characterized in that**, in a first phase (25) of an operating cycle, the control unit (20) controls the kite (14) in such a way that the kite (14) exerts a tractive force upon the traction cable (15), and that the power driven machine (17) is driven by the tractive force.

12. Device according to Claim 10 or 11, **characterized in that**, in a second phase (26) of an operating cycle, the control unit (20) controls the power driven machine (17) in such a way that the power driven machine (17) drives the traction-cable winch (16) by extracting kinetic energy from the second rotor (30).

## Revendications

1. Procédé de conversion d'énergie éolienne en énergie électrique, dans lequel, dans une première phase (25) d'un cycle de fonctionnement, une force de traction est exercée sur un treuil (16) de câble de traction avec un cerf-volant (14) et la force de traction est transformée en une force d'entraînement pour un engin de travaux à moteur (17) de telle sorte que l'engin de travaux à moteur (17) produit de l'énergie électrique, et dans lequel, dans une deuxième phase (26) du cycle de fonctionnement, le treuil (16) de câble de traction est entraîné avec l'engin de travail à moteur (17) pour enrouler le câble de traction (15), l'engin de travaux à moteur (17) comprenant un premier rotor (29), un deuxième rotor (30) en interaction électrique avec le premier rotor (29) et une section axiale, dans laquelle les composants magnétiques du premier rotor (29) chevauchent les composants magnétiques du deuxième rotor (30), le premier rotor (29) étant couplé mécaniquement au treuil (16) de câble de traction et, dans la deuxième phase (26) du cycle de fonctionnement, une énergie cinétique du deuxième rotor (30) étant utilisée pour entraîner le treuil (16) de câble de traction.

2. Procédé selon la revendication 1, **caractérisé en ce que** le premier rotor (29) et le deuxième rotor (30) sont des rotors à excitation externe.

3. Procédé selon la revendication 1 ou 2, **caractérisé en ce que** le deuxième rotor (30) présente une masse supérieure à celle du premier rotor (29).

4. Procédé selon l'une des revendications 1 à 3, **caractérisé en ce que** le deuxième rotor (30) est un rotor extérieur.

5. Procédé selon l'une des revendications 1 à 4, **caractérisé en ce que** le deuxième rotor (30) est pourvu d'une masse d'inertie (38).

6. Procédé selon l'une des revendications 1 à 5, **caractérisé en ce que** le premier rotor (29) et/ou le deuxième rotor (30) sont pilotés de telle sorte que le deuxième rotor (30) est accéléré dans la première phase (25) du cycle de fonctionnement.

7. Procédé selon la revendication 6, **caractérisé en ce que** dans la première phase (25) du cycle de fonctionnement, une quantité en énergie cinétique est stockée dans le deuxième rotor (30), qui suffit pour enrouler le câble de traction (15) jusqu'à la position de départ (5) pour le démarrage du prochain cycle de fonctionnement.

8. Procédé selon la revendication 6, **caractérisé en ce que** dans la première phase (25) du cycle de fonctionnement, une quantité en énergie cinétique est stockée dans le deuxième rotor (30), qui est inférieure à l'énergie requise pour enrouler le câble de traction (15), et que de l'énergie électrique provenant d'une source externe (19) est amenée pour enrouler le câble de traction (15).

9. Procédé selon l'une des revendications 1 à 8, **caractérisé en ce que** l'engin de travaux à moteur (17) est piloté de telle sorte que l'injection d'énergie est adaptée aux exigences du réseau de transmission (19) **en ce que**, dans une phase, une injection d'énergie trop importante est contrecarrée par l'accélération du deuxième rotor (30) et/ou **en ce que** dans une phase, une injection d'énergie trop faible est contrecarrée par le prélèvement d'énergie cinétique provenant du deuxième rotor (30).

10. Dispositif de conversion d'énergie éolienne en énergie électrique, avec un cerf-volant (14), avec un treuil (16) de câble de traction, avec un câble de traction (15), qui s'étend entre le treuil (16) de câble de traction et le cerf-volant (14), et avec une unité de commande (20), qui pilote le cerf-volant (14) et un engin de travaux à moteur (17), le treuil (16) de câble de traction étant couplé à l'engin de travaux à moteur (17) de telle sorte que dans un fonctionnement en mode générateur, l'engin de travaux à moteur (17) est entraîné par une force agissant sur le câble de traction (15) pour produire de l'énergie électrique, et de telle sorte que dans un fonctionnement en mode moteur, le treuil (16) de câble de traction est entraîné par l'engin de travaux à moteur (17) pour enrouler le câble de traction (15), l'engin de travaux à moteur (17) comprenant un premier rotor (29), un deuxième rotor (30) en interaction électrique avec le premier rotor (29) et une section axiale, dans laquelle les composants magnétiques du premier rotor (29) chevauchent les composants magnétiques du deuxième rotor (30).

11. Dispositif selon la revendication 10, **caractérisé en ce que** dans une première phase (25) d'un cycle de fonctionnement, l'unité de commande (20) pilote le cerf-volant (14) de telle sorte que le cerf-volant (14) exerce une force de traction sur le câble de traction (15) et que l'engin de travaux à moteur (17) est entraîné par la force de traction.

12. Dispositif selon la revendication 10 ou 11, **caractérisé en ce que** dans une deuxième phase (26) d'un cycle de fonctionnement, l'unité de commande (20) pilote l'engin de travaux à moteur (17) de telle sorte que l'engin de travaux à moteur (17) entraîne le treuil (16) de câble de traction tout en prélevant de l'énergie cinétique du deuxième rotor (30).
